# EUROPEAN PATENT APPLICATION

(11) **EP 2 114 024 A1**
(43) Date of publication of application: **04.11.2009**
(21) Application number: 09157063.0
(22) Date of filing: 01.04.2009
(51) Int. Cl.: H04B 10/08

(54) **System and method for self-generation of reference signals**

(30) Priority: 28.04.2008 US 111051
(71) Applicant: Avanex Corporation, Fremont, CA 94538 (US)
(72) Inventor: Summa, Mark, NEW YORK, NY 14870 (US); Williams, Martin, NEW YORK, NY 14814 (US); Lin, Christopher, El Cerrito, CA 94530 (US)
(74) Representative: Gauer, Pierre

(57) **Abstract**

One embodiment of the present invention sets forth a technique for determining properties of optical links using the amplified spontaneous emission (ASE) of integrated amplifiers. To calibrate the system, existing amplifiers in the nodes of the system can be operated in an ASE mode. A bypass switch at the mid-stage of each amplifier routes the ASE from the amplifier's first stage into one or more signal processing components, creating reference signals. Subsequently, the bypass switch routes the reference signals back into the mid-stage of the amplifier. After propagating through a link to the next node in the system, the optical parameters of the reference signals are measured and used to determine properties of the link, such as chromatic dispersion and attenuation. Tunable devices within the two nodes connected by the link may be set to compensate for specific properties of the link, thereby improving the quality of transmitted signals.

## Description

### BACKGROUND OF THE INVENTION

### Field of the Invention

The present invention relates generally to the field of fiber optic networks and more specifically to a system and method for self-generation of reference signals.

### Description of the Related Art

A typical fiber optic communication system includes nodes and links. Nodes usually include optical amplifiers, couplers, and decouplers. In many common applications, the nodes also include other devices, such as chromatic dispersion compensators and optical attenuators. Links, such as optical fibers, are used to convey optical signals between pairs of adjacent nodes within the system. Because channels can be added and dropped at each node, the links traversed by each signal in a transmission system may vary.

Several optical properties describe how links perform in optical transmission systems. One important optical property is chromatic dispersion. Chromatic dispersion is a variation in the velocity of optical signals according to wavelength. Among other things, this variation in velocity causes the light pulses of an optical signal to broaden as they travel through the link. This phenomenon can cause increased bit error rates if the light pulses spread to a point where they begin to overlap with one another. Chromatic dispersion increases linearly with distance traveled in the link. A tunable chromatic dispersion compensator can be used to compensate for the chromatic dispersion of the link, without knowing the actual link length. Another important optical property is attenuation. Attenuation is the loss of optical power, primarily due to absorption and scattering, as signals travel through the link. Attenuation varies by signal wavelength and by distance traveled in the link. Variations in signal strength due to attenuation may deteriorate the signal to noise ratio, reducing optical transmission quality. The attenuation of the link can be used to set variable optical attenuators to balance the strengths of the signals, thereby improving signal quality across the signal band.

Signals used to determine the optical properties of links, such as chromatic dispersion and attenuation, are called reference signals. One approach to transmitting reference signals in a link uses the optical supervisory channel (OSC) to transmit reference signals within a link. For example, a properly tuned laser can be used to add reference signals, which are coupled to the data signals, within the OSC at a first node in a system. After propagating through a link to a second node, the reference signals may be decoupled from the data signals, and optical parameters of the reference signals may then be measured and used to determine the optical properties of the link. Using another laser at the second node, new reference signals may be added to the OSC, coupled to the data signals and then propagated to the next node in the system. This approach can be used to determine the optical properties of each link in the system, and the measurements can be used to set compensation devices within the various nodes in the system, thereby improving the overall quality of the transmitted signals.

One drawback to this approach, however, is that it can only be used in systems where an OSC path is deployed. Another drawback is that OSC lasers typically have poorly controlled wavelengths, leading to general inaccuracies. This problem can be addressed by using more precise lasers at each node, but such a solution is expensive and still does not address systems that do not use OSC signals. Furthermore, measurement errors from each span can accumulate.

As the foregoing illustrates, what is needed in the art is a more flexible technique for determining the optical properties of the links in a multi-node optical communication system.

### SUMMARY OF THE INVENTION

One embodiment of the present invention sets forth a node in an optical transmission system. The node comprises a dual-stage amplifier that includes a first stage, a mid-stage bypass switch, a second stage, and a pulse generator. In a calibration mode, the mid-stage bypass switch is configured to route signals from the first stage of the dual-stage amplifier to the pulse generator, the pulse generator is configured to convert the signals to reference signals, and the mid-stage bypass switch is configured to route the reference signals to the second stage of the dual-stage amplifier for transmission to another node in the optical transmission system via an optical link.

One advantage of the disclosed system is that the wavelengths of the reference signals are within the wavelength band of typical data signals. Thus, the techniques described herein may be used in systems where no additional channels within the optical transmission system are desired or feasible.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 depicts an optical transmission system in which one or more aspects of the invention may be implemented;

Figure 2 illustrates a node in a calibration mode, according to one embodiment of the invention;

Figure 3 illustrates the red/blue pulse generator of Figure 2 used to generate the incoming reference signals, according to one embodiment of the invention;

Figure 4 illustrates a node in a data transmission mode, according to one embodiment of the invention; and

Figure 5 is a flow diagram of method steps for measuring one or more optical properties of a link, according to one embodiment of the invention.

### DETAILED DESCRIPTION

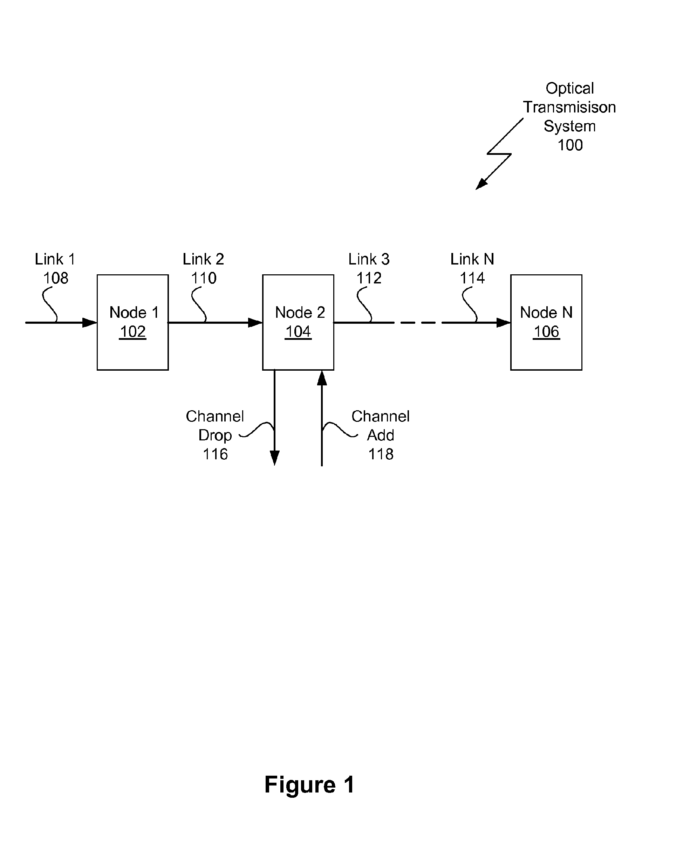

Figure 1 depicts an optical transmission system 100 in which one or more aspects of the invention may be implemented. As shown, the optical transmission system 100 includes, without limitation, a node 1 102, a node 2 104, and a node N 106. The optical transmission system 100 also includes a link 1 108 feeding into the node 1 102, a link 2 110 between the node 1 102 and the node 2 104, a channel drop 116 at the node 2 104, a channel add 118 at the node 2 104, a link 3 112 between the node 2 104 and the next node in the system, and a link N 114 between the next-to-last node in the system and the node N 106. The node 1 102 is configured to receive the optical signals through the link 1 108, regenerate these optical signals, and send the regenerated signals through the link 2 110. The node 2 104 is configured to receive the optical signals through the link 2 110, optionally drop a subset of these signals at the channel drop juncture 116, regenerate the remaining signals, optionally add signals at the channel add juncture 118, and send both the regenerated signals and any newly added signals through the link 3 112. The node N 106 is configured to receive the optical signals from the link N 114. Each of the links 108, 110, 112, and 114 comprises an optical transmission medium, such as optical fiber.

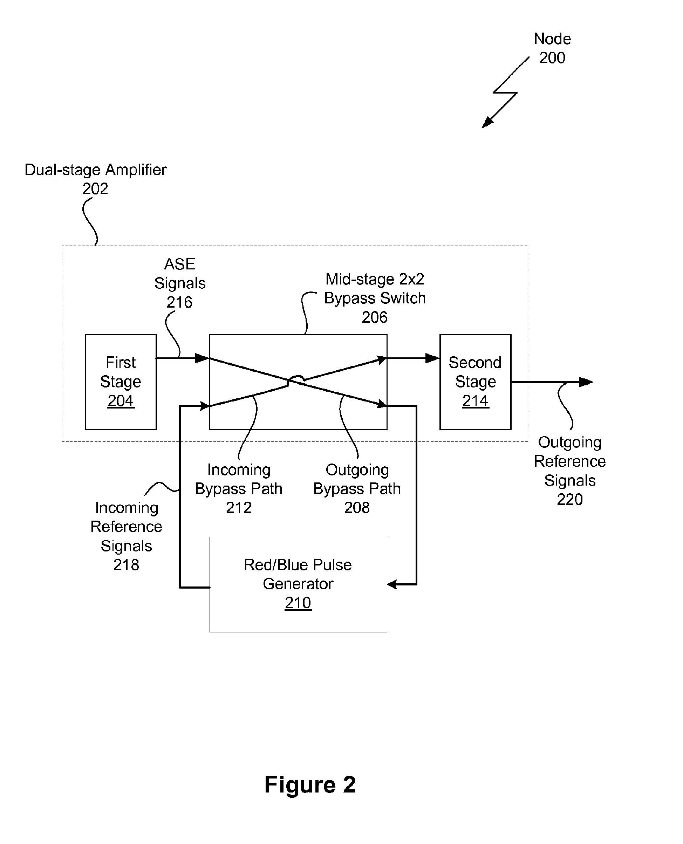

Figure 2 illustrates a node 200, such as one of the nodes depicted in Figure 1, in a calibration mode, according to one embodiment of the invention. During an initial setup period for the optical transmission system 100, the node 200 generates outgoing reference signals 220 used to determine the optical properties of the link connecting the node 200 and the next node in the system 100. The node 200 includes a dual-stage amplifier 202 and a red/blue pulse generator 210. By way of definition, a red/blue pulse generator is a generator that is configured to generate pulses at each end of the optical spectrum over which it operates.

The dual-stage amplifier 202 includes a first stage 204, a mid-stage 2x2 bypass switch 206, and a second stage 214. The dual-stage amplifier 202 is configured to operate in the calibration mode by setting the dual-stage amplifier 202 to an amplified spontaneous emission (ASE) mode and the mid-stage 2x2 bypass switch 206 to a bypass mode. The first stage 204 self-generates broadband ASE 216 - no input is used. The mid-stage 2x2 bypass switch 206 routes ASE 216 through an outgoing bypass path 208 to the red/blue pulse generator 210. The red/blue pulse generator 210 processes ASE 216, generating incoming reference signals 218 that are suitable for measuring signal parameters, such as phase delay and optical power. Subsequently, the mid-stage 2x2 bypass switch 206 routes the incoming reference signals 218 through an incoming bypass path 212, back into the mid-stage of the dual-stage amplifier 202. The second stage 214 amplifies the incoming reference signals 218, generating the outgoing reference signals 220. The outgoing reference signals 220 are sent through the link connecting the node 200 to the next node in the optical transmission system 100.

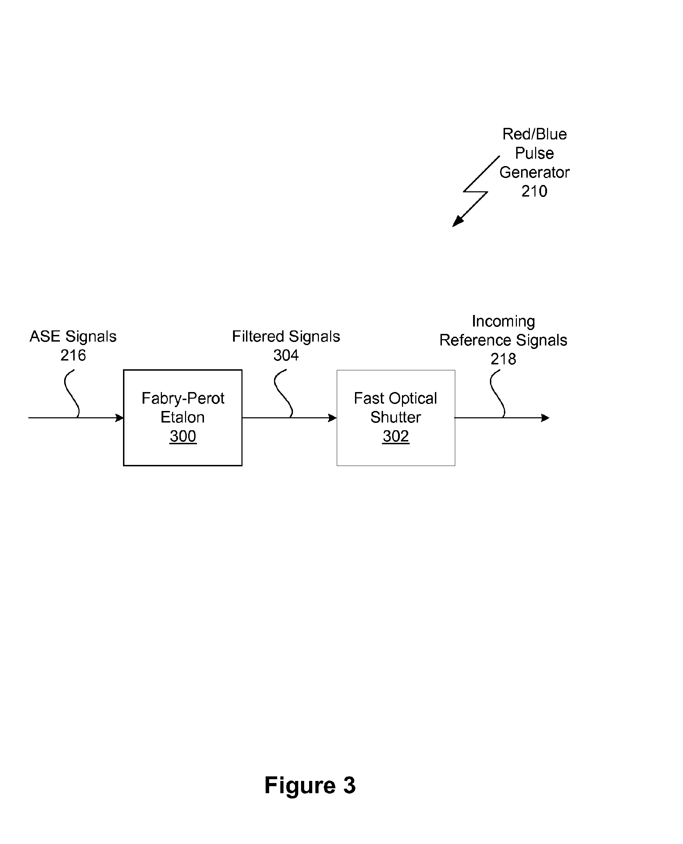

Figure 3 illustrates the red/blue pulse generator 210 of Figure 2 used to generate the incoming reference signals 218, according to one embodiment of the invention. As shown, the red/blue pulse generator 210 includes a Fabry-Perot etalon 300 and a fast optical shutter 302.

The Fabry-Perot etalon 300 is configured to have a free spectral range comparable to the ASE spectral width of the dual-stage amplifier 202. When ASE 216 is incident, the Fabry-Perot etalon 300 acts as a narrow-band optical filter, producing narrow light width filtered signals 304. The filtered signals 304 pass through the fast (on the order of 1 - 10 ns) optical shutter 302, producing the incoming reference signals 218. As persons skilled in the art will recognize, the red/blue pulse generator 210, thus configured, can produce incoming reference signals 218 with the pulses that are necessary for time-of-flight type measurements (i.e., measurements of the relative delays between the pulses of different wavelengths to determine the chromatic dispersion).

In an alternative embodiment of the red/blue pulse generator 210, the fast optical shutter 302 may be replaced with an optical modulator such as a LiNbO₃ modulator. This modulator will apply sinusoidal modulation to the self-generated red/blue light. As persons skilled in the art will also recognize, the incoming reference signals 218 generated using this configuration may be suitable for phase difference measurements.

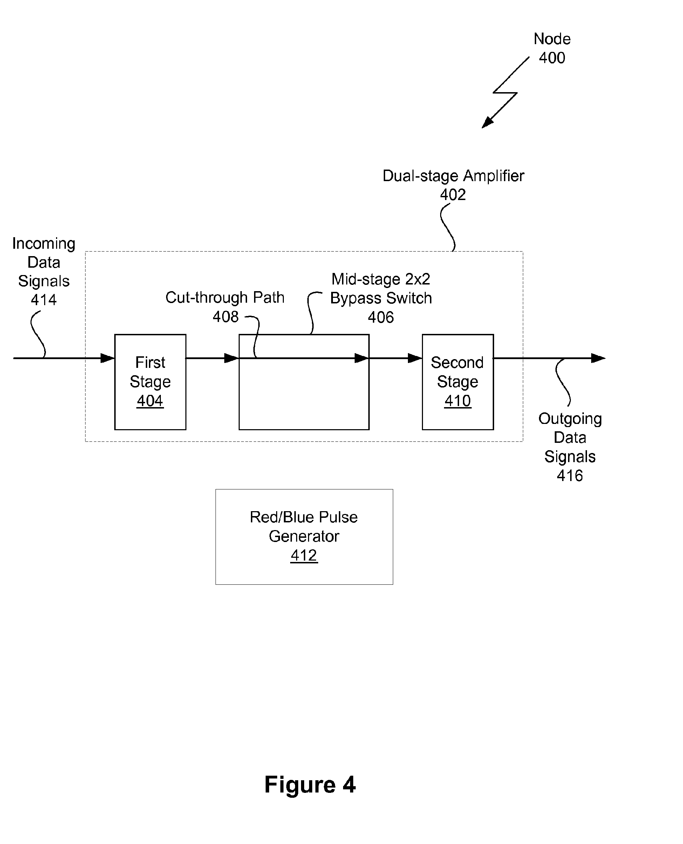

Figure 4 illustrates a node 400, such as one of the nodes depicted in Figure 1, in a data transmission mode, according to one embodiment of the invention. The node 400 regenerates incoming data signals 414, creating outgoing data signals 416, which propagate through the link connecting the node 400 to the next node in the optical transmission system 100. The node 400 includes a red-blue pulse generator 412 and a dual-stage amplifier 402. Although physically present, the red-blue pulse generator 412 is not used in the data transmission mode.

As shown, the dual-stage amplifier 402 includes a first stage 404, a mid-stage 2x2 bypass switch 406, and a second stage 410. The dual-stage amplifier 402 is configured to operate in the data transmission mode by setting the dual-stage amplifier 402 to an amplification mode and the mid-stage 2x2 bypass switch 406 to a cut-through mode. The first stage 404 pre-amplifies the incoming data signals 414. The mid-stage 2x2 bypass switch 406 routes the data signals 414 through a cut-through path 408 to the second stage 410. The second stage 410 amplifies the incoming data signals 414, creating the outgoing data signals 416.

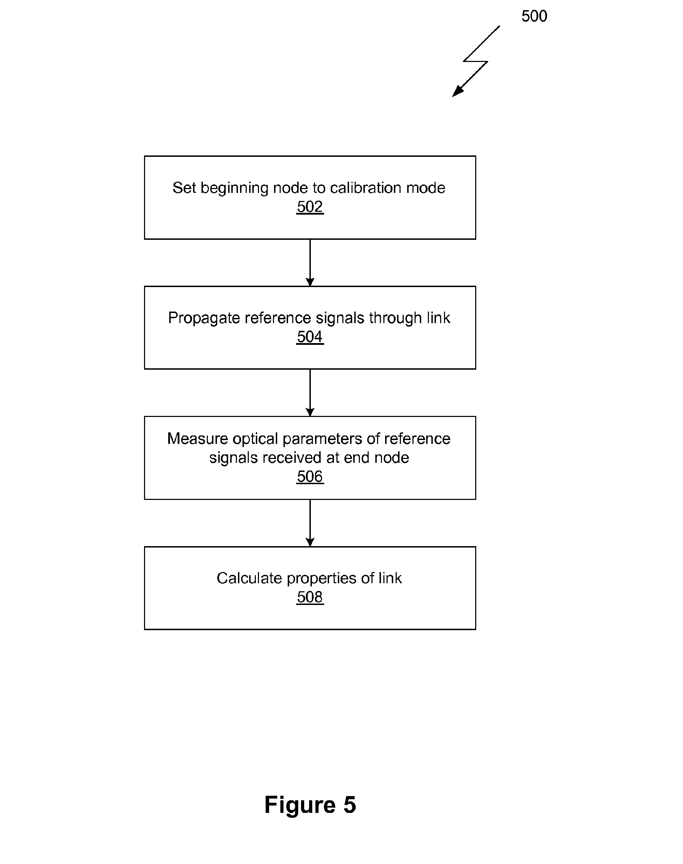

Figure 5 is a flow diagram of method steps for measuring one or more optical properties of a link, according to one embodiment of the invention. Although the method steps are described in conjunction with the systems of Figures 1 - 4, persons skilled in the art will understand that any system that performs the method steps, in any order, is within the scope of the invention.

As shown, the method 500 begins at step 502, where the node at the beginning of a link is placed in calibration mode by setting the dual-stage amplifier 202 to an ASE mode and the mid-stage 2x2 bypass switch 206 to a bypass mode.
In step 504, the generated outgoing reference signals 220 propagate through the link to the node at the end of the link. In step 506, the optical parameters of the reference signals received by the node at the end of the link are measured in any technically feasible way. In step 508, these measured optical parameters are used to calculate, also in any technically feasible way, one or more optical properties of the traversed link. As persons skilled in the art will recognize, these calculated link properties may then be used to set devices to compensate transmitted data signals for the optical impairments introduced by the link. Dispersion and attenuation are two such impairments. The method 500 can be utilized to determine the optical properties of each link in the system.

In sum, an integrated amplifier within a node and used to refresh data signals may also be used as a light source for generating optical reference signals suitable for inferring one or more properties of a down-stream link. In one embodiment, a bypass switch, a Fabry-Perot etalon, and a fast optical shutter are added at each node of the existing system. To calibrate the system, each dual-stage amplifier is set to an ASE mode and each bypass switch is set to a bypass mode. At each node, the broadband light from the first-stage of the amplifier is routed from the mid-stage of the amplifier through the Fabry-Perot etalon to produce narrowband signals. Passing through the fast optical shutter, these narrowband signals are modulated to produce reference signals. The reference signals are routed back into the mid-stage of the amplifier and are amplified in the second stage. The reference signals subsequently propagate through the link to the next node in the system, where they may be processed, in any technically feasible manner, to determine one or more optical properties of the link.

As persons skilled in the art will recognize, tunable compensation devices within the two nodes connected by the link may be configured using the measured properties of the link, thereby correcting for signal impairments introduced by the link and, thus, improving signal quality. In most practical applications, the compensation devices are set once and never reset. Advantageously, the calibration mode may therefore be executed only once - during the initial setup of the system. After completing the system setup, data signals may be transmitted by setting the integrated amplifiers to an amplification mode and setting the bypass switches to a cut-through mode.

One advantage of the disclosed systems is that the wavelengths of the reference signals are within the wavelength band of the data signals. Thus, the techniques described herein may be used in systems where no additional channels within the optical transmission system are desired or feasible. Furthermore, reusing the amplifiers already within the nodes of an optical transmission system reduces both the complexity and cost of measuring the optical properties of the system links. Another advantage is that only one generator is required. Also, the total error on each of Links 2-N should not grow but rather stay similar to the error on Link 1.

While the foregoing is directed to embodiments of the present invention, other and further embodiments of the invention may be devised without departing from the basic scope thereof, and the scope thereof is determined by the claims that follow.

## Claims

1. A node in an optical transmission system, the node comprising:
an amplifier having at least a first gain stage and a second gain stage; and
a pulse generator,
wherein, in a calibration mode, the amplifier is configured to route signals from the first gain stage to the pulse generator, and the pulse generator is configured to convert the signals to reference signals, and the amplifier is further configured to route the reference signals to the second gain stage for transmission to another node in the optical transmission system via an optical link.

2. The node of claim 1, wherein the reference signals are transmitted to the another node in the optical transmission system that measures or compensates for one or more optical parameters of the reference signals.

3. The node of claim 2, wherein the optical parameters are used to compute one or more optical properties of the optical link.

4. The node of claim 1, wherein the pulse generator is a red/blue pulse generator.

5. The node of claim 4, wherein the signals comprise amplified spontaneous emission (ASE).

6. The node of claim 5, wherein the pulse generator includes a Fabry-Perot etalon configured to convert the ASE into filtered signals, and a fast optical shutter configured to convert the filtered signals into the reference signals.

7. The node of claim 6, wherein the reference signals are transmitted to the another node in the optical transmission system for measuring a time-of-flight to determine an amount of chromatic dispersion in the optical link.

8. The node of claim 5, wherein the pulse generator includes a Fabry-Perot etalon configured to convert the ASE into filtered signals, and an optical modulator that is configured to apply sinusoidal modulation and convert the filtered signals into the reference signals.

9. The node of claim 8, wherein the reference signals are transmitted to the another node in the optical transmission system for measuring one or more phase differences among the reference signals to determine an amount of chromatic dispersion in the optical link.

10. The node of claim 1, wherein, in a transmission mode, the amplifier is configured to route data signals directly from the first gain stage to the second gain stage of the amplifier for transmission to the another node in the optical transmission system via the optical link.

11. An optical transmission system, comprising:
a first node having:
an amplifier having at least a first gain stage and a second gain stage, and
a pulse generator,
wherein, in a calibration mode, the amplifier is configured to route signals from the first gain stage to the pulse generator, and the pulse generator is configured to convert the signals to reference signals, and the amplifier is further configured to route the reference signals to the second gain stage for transmission;
a second node for receiving the reference signals transmitted from the second gain stage; and
an optical link connecting the first node to the second node through which the reference signals are transmitted.

12. The optical transmission system of claim 11, wherein the reference signals are transmitted to the second node that measures or compensates for one or more optical parameters of the reference signals.

13. The optical transmission system of claim 12, wherein the optical parameters are used to compute one or more optical properties of the optical link.

14. The optical transmission system of claim 11, wherein the pulse generator in the first node is a red/blue pulse generator.

15. The optical transmission system of claim 14, wherein the signals routed from the first gain stage to the pulse generator comprise amplified spontaneous emission (ASE).
